# EUROPEAN PATENT APPLICATION

(11) **EP 4 354 090 A1**
(43) Date of publication of application: **17.04.2024**
(21) Application number: 22820250.3
(22) Date of filing: 08.06.2022
(51) Int. Cl.: G01D 5/245

(54) **MOVEMENT DETECTOR**

(30) Priority: 08.06.2021 JP 2021096215
(71) Applicant: Oriental Motor Co., Ltd., Tokyo 111-0056 (JP); Ozeki, Sakao, Kakegawa-shi, Shizuoka, 436-0061 (JP)
(72) Inventor: HOUDA, Akihiko, Tsukuba-shi, Ibaraki 300-2635 (JP); SOMEYA, Masayuki, Tsukuba-shi, Ibaraki 300-2635 (JP); OZEKI, Sakao, Kakegawa-shi, Shizuoka 436-0061 (JP)
(74) Representative: Huebner, Stefan Rolf
(86) International application number: PCT/JP2022/023102
(87) International publication number: WO 2022/260071

(57) **Abstract**

A detector that is downsized by efficiently applying a high-period alternating magnetic field to a magnetic wire by use of a plurality of magnetic-field generation sources is provided. A detector 100 includes: a rotating body 110 having six magnetic-field generation sources 112; and a single power generation sensor 120. The six magnetic-field generation sources are disposed at equal distances from a rotational axis of the rotating body and at even intervals along a circumferential direction of the rotating body, orientations of magnetic fields of two of the magnetic-field generation sources adjacent to each other in the circumferential direction of the rotating body are different from each other, the power generation sensor includes: a magnetic wire 121 in which a large Barkhausen jump occurs; and a coil 122 wound around the magnetic wire, the magnetic wire is disposed on a straight line orthogonal to the rotational axis of the rotating body, and a central position 121a of the magnetic wire is on the rotational axis of the rotating body.

## Description

### [Technical Field]

The present invention relates to a detector that detects motion of a moving body by use of a power generation sensor.

### [Background Art]

A magnetic wire having a large Barkhausen effect (large Barkhausen jump) is known as a Wiegand wire or a pulse wire. The magnetic wire includes a core portion and a skin portion provided so as to surround the core portion. One of the core portion and the skin portion is a soft (soft magnetic) layer in which a reversal of a magnetization direction occurs even in a weak magnetic field, and the other of the core portion and the skin portion is a hard (hard magnetic) layer in which the magnetization direction is not reversed unless a strong magnetic field is applied.

When the hard layer and the soft layer are magnetized in the same orientation along an axial direction of the wire, the following occurs. When an external magnetic field strength in a direction opposite from the magnetization direction increases and a magnetic field strength at which the magnetization direction of the soft layer is reversed is reached, the magnetization direction of the soft layer is reversed. At this time, a large Barkhausen effect occurs, and a pulse signal is induced in a coil wound around the magnetic wire. The magnetic field strength at which the magnetization direction of the soft layer is reversed is referred to as an "operating magnetic field" in this specification. The magnetic wire and the coil are collectively referred to as a power generation sensor.

When the external magnetic field strength described above further increases and a magnetic field strength at which the magnetization direction of the hard layer is reversed is reached, the magnetization direction of the hard layer is reversed. The magnetic field strength at which the magnetization direction of the hard layer is reversed is referred to as a "stabilizing magnetic field" in this specification.

In order to cause a large Barkhausen effect to occur, only the magnetization direction of the soft layer needs to be reversed when the magnetization directions of the hard layer and the soft layer match each other. In a state in which the magnetization directions of the hard layer and the soft layer do not match each other, the following occurs. Even when only the magnetization direction of the soft layer is reversed, a pulse signal is not generated or the pulse signal is extremely small even when the pulse signal is generated.

An output voltage of the magnetic wire has the following features. For example, the output voltage is constant regardless of the speed of change of the magnetic field, and does not cause chattering because the output voltage has hysteresis characteristics with respect to an input magnetic field. Therefore, the magnetic wire is also used in a position detector and the like by being combined with a magnet and a counter circuit. It is also possible to perform operation including peripheral circuits by an output energy of the magnetic wire without the supply of external electric power.

When an alternating magnetic field is applied to the power generation sensor, a total of two pulse signals, that is, one positive pulse signal and one negative pulse signal are generated in one period. The motion of the moving body can be detected by causing a magnet serving as a generation source of a magnetic field to be the moving body and causing the magnetic field applied to the power generation sensor to change by the positional relationship between the magnet, that is the moving body, and the power generation sensor.

However, when only a single power generation sensor is used, a direction of motion is unidentifiable when the direction of motion of the moving body changes. As shown in Fig. 1 in Patent Document 1, the direction of motion can be identified when a plurality of power generation sensors are used, but size and cost of the detector increase.

In Patent Document 2, it is disclosed that a single power generation sensor and another sensor element that is not the power generation sensor are used. In the same document, a case in which a single magnet (dipole) is used and a case in which a plurality of magnets (multipole) are used to improve the resolution are further described.

As a structure example of the detection by a single magnet (Fig. 2 in Patent Document 2), Fig. 1 in Patent Document 3 is given. A structure in which a dipole magnet and a power generation sensor face each other is suitable for downsizing because a diameter can be reduced to an entire length of the power generation sensor. As a structure example for increasing the resolution (Fig. 3 in Patent Document 2), Fig. 1 in Patent Document 4 is given. One of the main usages of this type of motion detector is the detection of a number of rotations in one rotation unit. In a motion detector using a power generation sensor, there has been a problem in that a pulse signal that is supposed to be output is not output in some cases, and the number of rotations cannot be correctly determined in a structure of a single magnet (dipole) in which only two pulses are output for one rotation because there is generally poor accuracy.

In Patent Document 5, it is disclosed that a magnetization direction of a magnetic wire in a power generation sensor is determined by generating a magnetic field by causing a current to flow through a coil in the power generation sensor and monitoring an output state. In the same document, it is disclosed that a number of rotations can be determined even when a single magnet is used by the determination of the magnetization direction as above.

### [Citation List]

### [Patent Document]

[Patent Document 1] Japanese Patent No. 5511748
[Patent Document 2] Japanese Patent No. 4712390
[Patent Document 3] US No. 9528856 B
[Patent Document 4] US No. 8283914 B
[Patent Document 5] Japanese Patent No. 5730809

### [Summary of Invention]

### [Technical Problem]

Using a plurality of power generation sensors at a time of detection of motion easily leads to an increase in size of a detector itself. In addition, even when a single power generation sensor is used, processing for determining a magnetization direction of a magnetic wire in the power generation sensor may become complicated.

Thus, an object of the present invention is to provide a detector that is downsized by efficiently applying a high-period alternating magnetic field to a magnetic wire by use of a single power generation sensor and a plurality of magnetic-field generation sources.

### [Solution to Problem]

A detector includes: a rotating body having six magnetic-field generation sources; and a single power generation sensor. The six magnetic-field generation sources are disposed at equal distances from a rotational axis of the rotating body and at even intervals along a circumferential direction of the rotating body, and orientations of magnetic fields of two of the magnetic-field generation sources adjacent to each other in the circumferential direction of the rotating body are different from each other. The single power generation sensor includes: a magnetic wire in which a large Barkhausen jump occurs; and a coil wound around the magnetic wire. The magnetic wire is disposed on a straight line orthogonal to the rotational axis of the rotating body, and a central position of the magnetic wire is on the rotational axis of the rotating body.

### [Advantageous Effect of Invention]

According to the present invention, it is possible to provide a detector that is downsized by efficiently applying the high-period alternating magnetic field to the magnetic wire by use of the plurality of magnetic-field generation sources.

### [Brief Description of Drawings]

[Fig. 1] Fig. 1 is a side view showing a detector according to a first embodiment.
[Fig. 2] Fig. 2 is an upper view showing the detector according to the first embodiment.
[Fig. 3A] Fig. 3A is another upper view showing the detector according to the first embodiment.
[Fig. 3B] Fig. 3B is an explanatory view showing a magnetic circuit of the detector according to the first embodiment.
[Fig. 3C] Fig. 3C is an upper view of a detector according to a comparative example.
[Fig. 4] Fig. 4 is an upper view showing a detector according to a second embodiment.
[Fig. 5A] Fig. 5A is another upper view showing the detector according to the second embodiment.
[Fig. 5B] Fig. 5B is an explanatory view showing a magnetic circuit of the detector according to the second embodiment.
[Fig. 6] Fig. 6 is an upper view showing a detector according to a third embodiment.
[Fig. 7A] Fig. 7A is an explanatory view showing magnetic fields applied to a power generation sensor, and output signals.
[Fig. 7B] Fig. 7B is an explanatory view showing magnetic fields applied to a magnetic sensor, and output signals.
[Fig. 7C] Fig. 7C(A) is an explanatory view showing combinations of a detection result of the power generation sensor and a detection result of the magnetic sensor. Fig. 7C(B) is an explanatory view showing synchronization of the power generation sensor and the magnetic sensor and rotational coordinates of output signals.
[Fig. 7D] Fig. 7D is an explanatory view showing the number of counts of the output signal.

### [Description of Embodiments]

The present invention is described below on the basis of illustrated embodiments. However, the present invention is not limited to the embodiments described below.

### First Embodiment

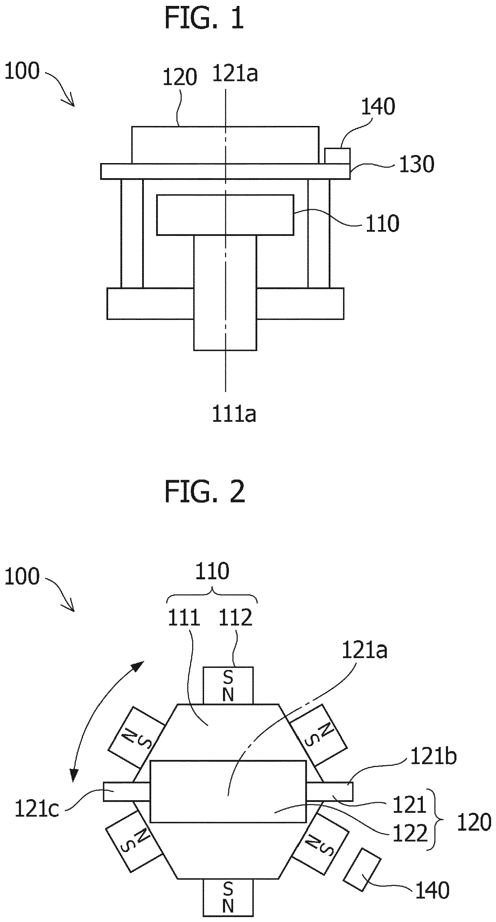

As shown in Fig. 1 and Fig. 2, a detector 100 includes a rotating body 110 and a power generation sensor 120.

The rotating body 110 has a hub 111 and six magnetic-field generation sources 112. The hub 111 has a shape that is a discoid shape, a columnar shape, a prismatic shape, or the like and is made of a soft magnetic body.

The rotating body 110 rotates about an axis 111a of the hub 111 serving as a rotational axis.

The six magnetic-field generation sources 112 are disposed on an outer circumferential portion of the hub 111 at equal distances from the rotational axis 111a of the hub 111 and at even intervals along a circumferential direction.

The six magnetic-field generation sources 112 are magnetized in a radial direction and has an outer magnetic pole portion positioned on a radial-direction outer side and an inner magnetic pole portion positioned on a radial-direction inner side.

The outer magnetic pole portions of two magnetic-field generation sources 112 adjacent to each other in the circumferential direction are heteropolar.

The six magnetic-field generation sources 112 may be replaced with a single ring magnet having six pairs of an N-pole and an S-pole.

The power generation sensor 120 is disposed on a board 130 disposed to face the rotating body 110 in a rotational axis direction. The power generation sensor 120 includes a magnetic wire 121 and a coil 122 wound around the magnetic wire 121. The axial direction of the magnetic wire 121 is orthogonal to the rotational axis 111a, and an axial-direction central portion 121a thereof is on the rotational axis 111a.

The detector 100 further includes a magnetic sensor 140 disposed on the board 130 and a signal processing circuit (not shown). The magnetic sensor is disposed so as to form a predetermined angle with an axial-direction first end portion 121b of the magnetic wire 121 about the rotational axis 111a.

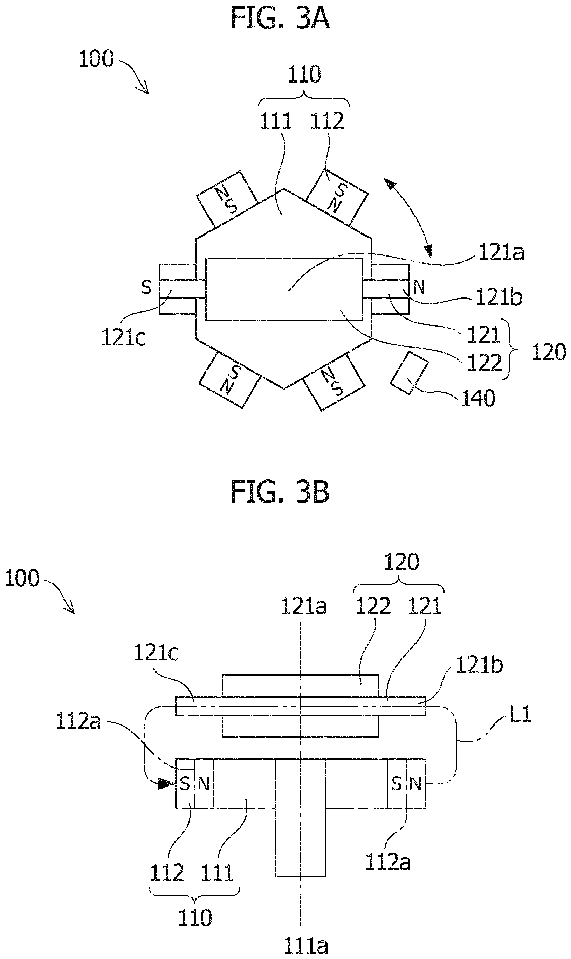

A state in which the rotating body 110 is rotated, and one of the two magnetic-field generation sources 112 facing each other across the rotational axis 111a is positioned below the axial-direction first end portion 121b in the magnetic wire 121 and the other is positioned below an axial-direction second end portion 121c is shown in Figs. 3A and 3B.

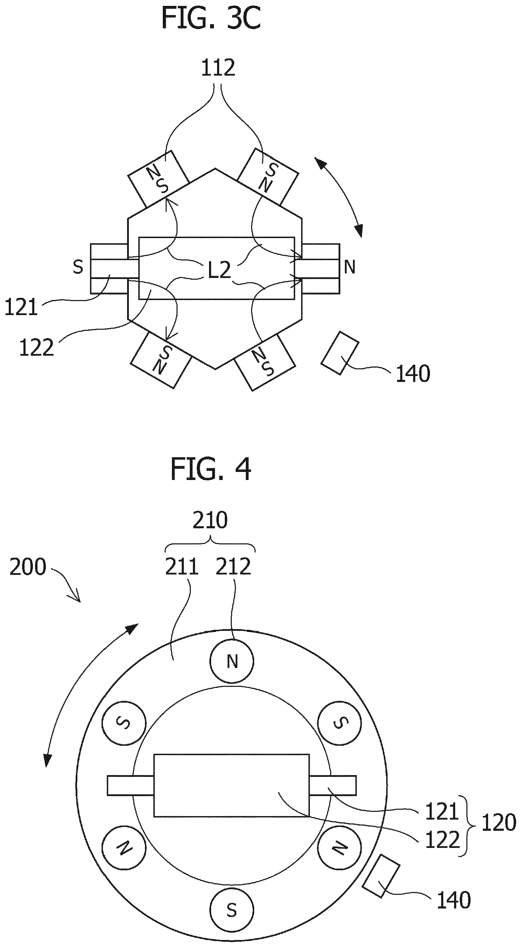

When the hub 111 is not made of a soft magnetic body, a magnetic field line L2 passes from the inner magnetic pole portion of one magnetic-field generation source out of the two magnetic-field generation sources 112 adjacent to each other in the circumferential direction to the inner magnetic pole portion of the other magnetic-field generation source through the axial-direction central portion of the magnetic wire 121 as shown in Fig. 3C.

In this embodiment, the hub 111 made of a soft magnetic body has a function of blocking excess magnetic field lines L2 for this detector.

The hub 111 rotates together with the magnetic-field generation source 112. Therefore, an attraction force between the two magnetic-field generation sources does not affect the rotation motion of the rotating body 110.

As shown in Fig. 3B, a magnetic flux L1 from the outer magnetic pole portion of one magnetic-field generation source out of the two magnetic-field generation sources 112 facing each other in the radial direction toward the outer magnetic pole portion of the other magnetic-field generation source through the magnetic wire 121 is generated.

In order to cause the magnetic flux L1 as above to be generated, a boundary portion 112a between two magnetic poles in the magnetic-field generation source 112 only needs to be positioned on the radial-direction inner side of both axial-direction end surfaces of the magnetic wire 121.

A rotation direction and a position can be determined by use of a technology as that described in Patent Document 2 by determining the polarity of the magnet positioned in a vicinity by the magnetic sensor 140 when a pulse voltage is output from the power generation sensor 120. In the classification in the same document, the above is equivalent to "a third group: a trigger direction of re-magnetization is not defined".

Six magnetic-field generation sources are provided, and hence, one pulse of the power generation sensor is equivalent to a rotation of 60 degrees. A maximum of two pulses expected to be output from the power generation sensor may not be output depending on the reversal of the rotation direction. This error of ±2 pulses is equivalent to ±120 degrees. Therefore, even when there is a case in which pulses are not output, the determination of a number of rotations is not affected.

As above, according to this embodiment, the number of rotations can be determined, and a motion detector that is small in size and low in cost is realized.

### Second Embodiment

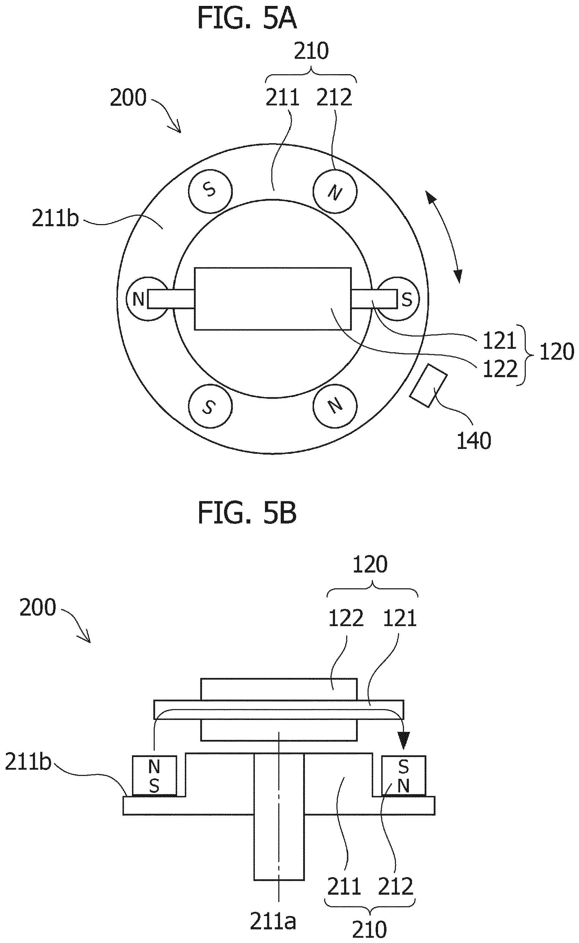

As shown in Figs. 4, 5A, and 5B, a detector 200 includes a rotating body 210, the power generation sensor 120, and the magnetic sensor 140.

The rotating body 210 has a hub 211 and six magnetic-field generation sources 212. The hub 211 has a shape that is a discoid shape, a columnar shape, a prismatic shape, or the like and is made of a soft magnetic body.

The rotating body 210 rotates about an axis 211a of the hub 211 serving as a rotational axis.

A stepped portion 211b is formed in an outer circumferential edge portion of an upper surface of the hub 211 so as to be one step lower than an upper-surface central portion.

The six magnetic-field generation sources 212 are disposed on the stepped portion 211b at equal distances from the rotational axis 211a of the hub 211 and at even intervals along the circumferential direction.

The six magnetic-field generation sources 212 are magnetized in the rotational axis direction and each have a first magnetic pole portion facing one direction of the rotational axis direction and a second magnetic pole portion facing the other direction. The first magnetic pole portions of two magnetic-field generation sources 212 adjacent to each other in the circumferential direction are heteropolar.

The six magnetic-field generation sources 212 may be replaced with a single ring magnet or discoid-shaped magnet having six pairs of an N-pole and an S-pole. The hub 211 in the second embodiment does not necessarily need to be made of a soft magnetic body and does not necessarily need to have magnetic properties.

An upper-surface central portion of the hub 211 is in a position closer to the magnetic wire than the stepped portion 211b on which the magnetic-field generation sources are disposed. Therefore, a magnetic flux (an excess magnetic flux for this detector) from one magnetic-field generation source out of the two magnetic-field generation sources 212 adjacent to each other in the circumferential direction to the other magnetic-field generation source through a magnetic-wire central portion can be blocked by the upper-surface central portion of the hub 211.

When the six magnetic-field generation sources are formed by multipolar-magnetization on a single member, the magnetic flux does not reach very far, and hence, the magnetic wire and the magnetic-field generation sources need to be disposed closer to each other. It is preferred that an interval between the magnetic wire and each magnetic-field generation source in the rotational axis direction be equal to or less than a length of the magnetic wire.

According to this embodiment, as with the first embodiment, the number of rotations can be determined, and a motion detector that is small in size and low in cost is realized.

### Third Embodiment

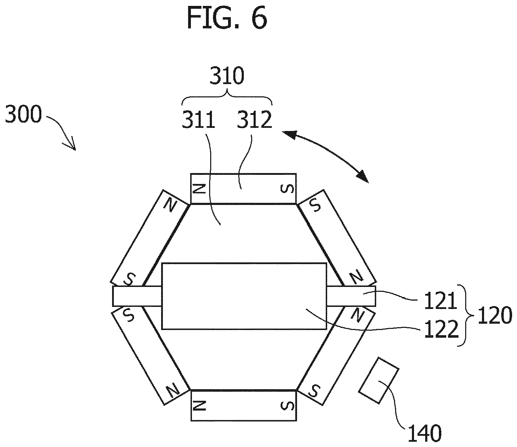

As shown in Fig. 6, a detector 300 includes a rotating body 310, the power generation sensor 120, and the magnetic sensor 140.

The rotating body 310 has a hub 311 and six magnetic-field generation sources 312.

The hub 311 has a hexagonal prism shape and is made of a soft magnetic body.

The rotating body 311 rotates about an axis of the hub 311 serving as a rotational axis.

The six magnetic-field generation sources 312 are rod-like magnets and are respectively mounted on six outer circumference surfaces of the hub 311 at equal distances from the rotational axis of the hub 311 and at even intervals along the circumferential direction. The six magnetic-field generation sources 312 are magnetized in the circumferential direction. In two magnetic-field generation sources adjacent to each other in the circumferential direction, a magnetic pole portion of one magnetic-field generation source and a magnetic pole portion of the other magnetic-field generation source adjacent to the magnetic pole portion are homopolar.

As with the second embodiment, in a third embodiment, a stepped portion may be formed in an outer circumferential edge portion of an upper surface of the hub 311 so as to be one step lower than an upper-surface central portion, and the six magnetic-field generation sources 312 may be disposed on the stepped portion.

### Method of Determining Number of Rotations and Rotation Direction

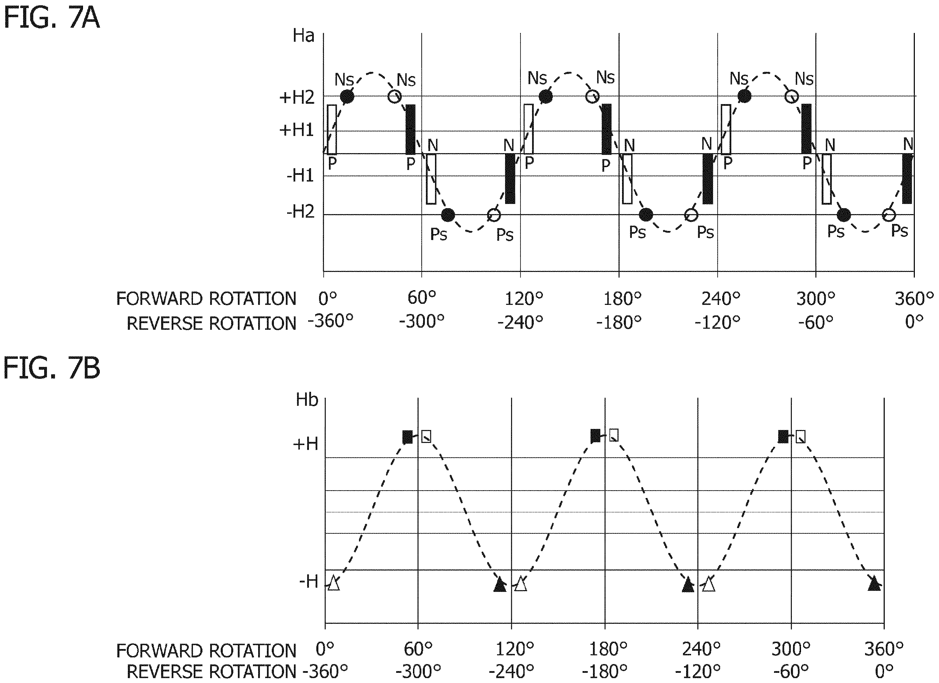

In Fig. 2, right rotation of the rotating body (or a moving body) 110 is the forward rotation, and left rotation thereof is the reverse rotation. A magnetic field Ha applied to the power generation sensor 120 at the time of rotation is shown in Fig. 7A. A positive pulse signal generated in the power generation sensor 120 at the time of the forward rotation is indicated by reference character P, a stabilizing magnetic field serving as the basis of the output of the signal P is indicated by reference character Ps, a negative pulse signal is indicated by reference character N, and a stabilizing magnetic field serving as the basis of the output of the signal N is indicated by reference character Ns. The stabilizing magnetic field is ±H2, and the operating magnetic field is ±H1. The output at the time of the reverse rotation is indicated by the same reference character as that at the time of the forward rotation, but the reference character at the time of the forward rotation is indicated by being colored in white and the reference character at the time of the reverse rotation is indicated by being colored in black.

The magnetic field applied from the magnetic-field generation sources 112 to the power generation sensor 120 is an alternating magnetic field of three periods for one rotation. Therefore, the power generation sensor 120 outputs the positive and negative (P, N) signals three times for one forward rotation, and outputs the positive and negative (P, N) signals three times for one reverse rotation as with the time of the forward rotation.

In Fig. 7B, a magnetic field Hb applied to the magnetic sensor 140 is indicated by a one-dot chain line. As described above, the magnetic sensor 140 is disposed so as to form a predetermined angle with the axial-direction first end portion 121b about the rotational axis 111a. Therefore, when the predetermined angle is 30 degrees, the alternating magnetic field Hb is shifted from the alternating magnetic field Ha shown in Fig. 7A by a phase of 30 degrees. As the magnetic sensor 140, a magnetic sensor that can determine NS poles (plus and minus in the drawing) such as a Hall element and a magneto-resistive element (SV-GMR, TMR) can be used. In this case, when three P-signals of the forward rotation and three N-signals of the reverse rotation are output from the power generation sensor 120, a signal indicating that a minus magnetic field has been detected is output from the magnetic sensor 140. The above is indicated by triangular shapes colored in white and black in the drawing. When three N-signals of the forward rotation and three P-signals of the reverse rotation are output from the power generation sensor 120, a signal indicating that a plus magnetic field has been detected is output from the magnetic sensor 140. The above is indicated by quadrilateral shapes colored in white and black in the drawing.

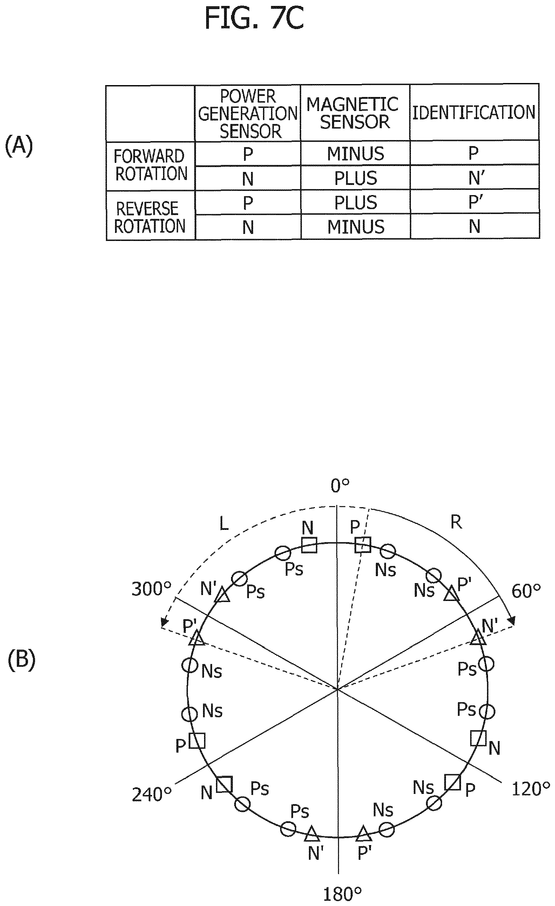

Fig. 7C(A) shows combinations of an output signal of the power generation sensor 120 and a detection signal of the magnetic sensor 140.

Fig. 7C(B) shows rotational coordinates. A rotation angle from when a positive pulse signal P is output to when the moving body 110 rotates to the right as indicated by reference character R and a next signal N' is detected is +60 degrees. On the other hand, when the moving body 110 rotates to the left as indicated by reference character L immediately after the positive pulse signal P is output, the next signal is expected to be a signal N. However, the stabilizing magnetic field Ns is not passed through. Therefore, the signal N is not output or the signal N is extremely small even when the signal N is output, and it becomes difficult to perform evaluation. Therefore, a rotation angle until the next evaluable left rotation signal that is a signal P' can be output is about -(60 degrees + α). As above, even when there is rotation motion in which a stabilizing magnetic field is not applied in either of the forward rotation or the reverse rotation, a range in which the same signal is duplicated is not generated. A range of the positions that can be determined becomes less than 360 degrees, and the number of rotations of the moving body 110 can be accurately detected.

Regarding the method of determining the rotation direction of the moving body 110, a case in which there are two successive signals is described as one example to facilitate understanding.

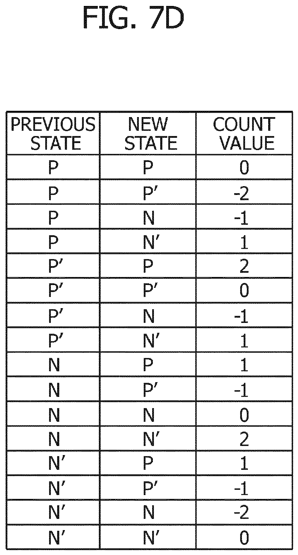

The determination is performed by a signal processing circuit (not shown) including a memory. The signal processing circuit has an identification function, a reference function, and a calculation function. First, the signal processing circuit identifies signals from the power generation sensor 120 as any one of four signals, that are, P, P', N, and N' by the identification function. Next, the signal processing circuit successively writes a previous history signal (previous state) stored in an initial state for starting the counting of the number of rotations and the rotation direction and a signal (new state) in accordance with the rotation thereafter into a memory by the reference function. The signal processing circuit searches a preset table obtained by four types of codes for two successive past and current signals stored in the memory, and returns a count value that has matched. One example of the table is shown in Fig. 7D. The signal processing circuit performs a search every time a signal is input, and a count value of a result thereof is sequentially added and subtracted by the calculation function. Numerical values obtained by the addition and subtraction indicate the number of rotations and the rotation direction at that time point. By setting a reference position between the signal N and the signal P and using a table as that shown in Fig. 7D, the rotation direction and the number of rotations of the moving body 110 can be accurately counted.

### Method of Synchronizing Positions and Number of Rotations in One Rotation

When the detector is used for multi-rotation of a motor, the number of rotations is detected by a method described above with reference to Fig. 7D during a power suspension of a motor driving system. When the motor driving system is activated, each of the signals P, P', N, and N' exists in two places in one rotation. Thus, it becomes a choice between two regions, and the number of rotations cannot be specified. Therefore, a displacement angle needs to be determined from a reference position of a rotational counter. Thus, a one-rotation absolute-type position sensor is externally mounted. As a result, it can be determined which region the position is in, and the number of rotations can be specified.

Following supplements are disclosed regarding the embodiments described above.

### Supplement 1

A detector that detects motion of a rotating body, the detector including:
a rotating body having six magnetic-field generation sources; and
a single power generation sensor, in which:

the six magnetic-field generation sources are disposed at equal distances from a rotational axis of the rotating body and at even intervals along a circumferential direction of the rotating body;
orientations of magnetic fields of two of the magnetic-field generation sources adjacent to each other in the circumferential direction of the rotating body are different from each other;
the single power generation sensor includes:
   a magnetic wire in which a large Barkhausen jump occurs; and
   a coil wound around the magnetic wire;
the magnetic wire is disposed on a straight line orthogonal to the rotational axis of the rotating body; and
a central position of the magnetic wire is on the rotational axis of the rotating body.

### Supplement 2

The detector according to Supplement 1, in which the six magnetic-field generation sources are either six magnets or a single magnet on which magnetization is performed in six sections.

### Supplement 3

The detector according to Supplement 2, wherein a magnetization direction of the six magnets or the single magnet is orthogonal to the rotational axis of the rotating body.

### Supplement 4

The detector according to Supplement 2 or 3, in which:
the rotating body is a hub formed by a soft magnetic body; and
the six magnets are, or the single magnet is, provided on the hub.

### Supplement 5

The detector according to Supplement 4, in which:
the six magnets are, or the single magnet is, disposed on an outer circumferential portion of the rotating body; and
a radial-direction central position of each of the six magnets or a radial-direction central position of each of six magnetization sections in the single magnet is on a radial-direction inner side of both end portions of the magnetic wire.

### Supplement 6

The detector according to Supplement 2, in which a magnetization direction of the six magnets or the single magnet is in parallel to the rotational axis of the rotating body.

### Supplement 7

The detector according to Supplement 6, in which a distance from the six magnets or the single magnet to the magnetic wire is equal to or less than half an entire length of the magnetic wire.

### Supplement 8

The detector according to Supplement 6 or 7, in which:
the rotating body is a hub formed by a soft magnetic body portion; and
the six magnets are, or the single magnet is, provided on the hub.

### Supplement 9

The detector according to Supplement 8, in which:
a stepped portion is formed in an outer circumferential edge portion of a front surface of the hub facing the magnetic wire so as to be one step lower than a central portion of the front surface; and
the six magnets are, or the single magnet is, disposed on the stepped portion.

### Supplement 10

The detector according to Supplement 2, in which a magnetization direction of the six magnets or the single magnet is a circumferential direction or a circumferential tangent direction of a circle about the rotational axis of the rotating body.

### Supplement 11

The detector according to Supplement 10, in which:
the rotating body is a hub formed by a soft magnetic body; and
the six magnets are, or the single magnet is, provided on the hub.

### Supplement 12

The detector according to any one of Supplements 1 to 11, further including:
a magnetic sensor that detects a magnetic field from the magnetic-field generation source when the power generation sensor outputs a signal; and
a circuit that obtains a number of rotations and a rotation direction of the rotating body on a basis of a signal output by the power generation sensor and the magnetic sensor in accordance with a rotation of the rotating body.

The embodiments of the present invention have been described above, but the present invention is not limited to the embodiments described above, and various types of modifications and changes can be made on the basis of the technical idea of the present invention.

### [Reference Signs List]

100, 200, 300 motion detector
110, 210, 310 moving body
111, 211, 311 soft magnetic body portion
112, 212, 312 magnetic-field generation source
120, 220 power generation sensor
121, 221 magnetic wire
122, 222 coil
140 magnetic sensor

## Claims

1. A detector for detecting motion of a rotating body, the detector including:
the rotating body having six magnetic-field generation sources; and
a single power generation sensor, wherein:
the six magnetic-field generation sources are disposed at equal distances from a rotational axis of the rotating body and at even intervals along a circumferential direction of the rotating body;
orientations of magnetic fields of two of the magnetic-field generation sources adjacent to each other in the circumferential direction of the rotating body, are different from each other;
the single power generation sensor includes:
a magnetic wire in which a large Barkhausen jump occurs; and
a coil wound around the magnetic wire;
the magnetic wire is disposed on a straight line orthogonal to the rotational axis of the rotating body; and
a central position of the magnetic wire is on the rotational axis of the rotating body.

2. The detector according to claim 1, wherein the six magnetic-field generation sources are either six magnets or a single magnet on which magnetization is performed in six sections.

3. The detector according to claim 2, wherein a magnetization direction of the six magnets or the single magnet is orthogonal to the rotational axis of the rotating body.

4. The detector according to claim 2 or 3, wherein:
the rotating body is a hub formed by a soft magnetic body; and
the six magnets are, or the single magnet is, provided on the hub.

5. The detector according to claim 4, wherein:
the six magnets are, or the single magnet is, disposed on an outer circumferential portion of the rotating body; and
a radial-direction central position of each of the six magnets, or a radial-direction central position of each of six magnetization sections in the single magnet, is on a radial-direction inner side of both end portions of the magnetic wire.

6. The detector according to claim 2, wherein a magnetization direction of the six magnets or the single magnet is in parallel to the rotational axis of the rotating body.

7. The detector according to claim 6, wherein a distance from the six magnets or the single magnet to the magnetic wire is equal to or less than half an entire length of the magnetic wire.

8. The detector according to claim 6 or 7, wherein:
the rotating body is a hub formed by a soft magnetic body portion; and
the six magnets are, or the single magnet is, provided on the hub.

9. The detector according to claim 8, wherein:
a stepped portion is formed in an outer circumferential edge portion of a front surface of the hub facing the magnetic wire so as to be one step lower than a central portion of the front surface; and
the six magnets are, or the single magnet is, disposed on the stepped portion.

10. The detector according to claim 2, wherein a magnetization direction of the six magnets or the single magnet is a circumferential direction or a circumferential tangent direction of a circle about the rotational axis of the rotating body.

11. The detector according to claim 10, wherein:
the rotating body is a hub formed by a soft magnetic body; and
the six magnets are, or the single magnet is, provided on the hub.

12. The detector according to claim 1, further comprising:
a magnetic sensor that detects a magnetic field from the magnetic-field generation source when the power generation sensor outputs a signal; and
a circuit that obtains a number of rotations and a rotation direction of the rotating body on a basis of a signal output by the power generation sensor and the magnetic sensor in accordance with a rotation of the rotating body.
